# EUROPEAN PATENT SPECIFICATION

(11) **EP 4 166 007 B1**
(45) Date of publication and mention of the grant of the patent: **04.02.2026**
(21) Application number: 22828079.8
(22) Date of filing: 09.05.2022
(51) Int. Cl.: A23L 13/60, A23L 7/10, A23L 13/00

(54) **METHOD FOR PRODUCING GRAIN-MIXED GROUND MEAT**
VERFAHREN ZUR HERSTELLUNG VON MIT KÖRNERN GEMISCHTEN HACKFLEISCH
PROCÉDÉ DE PRODUCTION DE VIANDE HACHÉE MÉLANGÉE À DES GRAINES

(30) Priority: 21.06.2021 JP 2021102106
(43) Date of publication of application: 19.04.2023
(73) Proprietor: Nippon Food Manufacturer Co., Sapporo-shi, Hokkaido, 063-0841 (JP)
(72) Inventor: TOBE Ken Luis, Sapporo-shi Hokkaido 063-0841 (JP)
(74) Representative: Wasner, Marita
(86) International application number: PCT/JP2022/019655
(87) International publication number: WO 2022/270160

(56) References cited:
- WO-A1-2023/149378
- DE-A1- 3 031 896
- JP-A- 2018 093 862
- JP-A- 2018 093 862
- JP-A- H05 219 907
- JP-A- H05 219 907
- JP-B1- S4 315 765
- US-A- 3 952 111
- ANONYMOUS: "eclipse premium pure oatmeal 00g", NIHONSHOKUHIN, 4 November 2020 (2020-11-04), pages 1 - 3, XP093016617, Retrieved from the Internet <URL:https://web.archive.org/web/20201104142512/www.nihonshokuhin.co.jp/oatmeal/premium_pure_oatmeal.html> [retrieved on 20230123]
- ANONYMOUS: "Oatmeal chicken breast hamburger", OATMEAL-RECIPE, 15 September 2020 (2020-09-15), pages 1 - 9, XP093016606, Retrieved from the Internet <URL:https://oatmeal-recipe.online/?p=745> [retrieved on 20230123]
- ANONYMOUS: "Mochi barley, round barley, rolled barley, barley, what is the difference?", HAKUBAKU, 30 November 2020 (2020-11-30), pages 1 - 6, XP093016650, Retrieved from the Internet <URL:https://www.hakubaku.co.jp/omugi-lab/hyakka/kakouhou/> [retrieved on 20230123]
- RIKA5: "Fluffy hamburg steak without bread crumbs", COOKPAD, 5 November 2012 (2012-11-05), pages 1 - 3, XP093016654, Retrieved from the Internet <URL:https://cookpad.com/recipe/2016987> [retrieved on 20230123]
- ANONYMOUS: "What is rolled barley?", TUBUTUBU-OFFICIALBLOG, 28 March 2019 (2019-03-28), pages 1 - 10, XP093016641, Retrieved from the Internet <URL:https://tubutubu-officialblog.net/2019/03/28/4151> [retrieved on 20230123]
- LITTLE DARLING: "[Meatloaf] American Mom's Taste", RECIPE-BLOG, 2 July 2013 (2013-07-02), pages 1 - 4, XP093016625, Retrieved from the Internet <URL:https://www.recipe-blog.jp/profile/12423/recipe/612897> [retrieved on 20230123]
- KOENYAN: "frying pan meatloaf", COOKPAD, 8 July 2015 (2015-07-08), pages 1 - 3, XP093016637, Retrieved from the Internet <URL:https://cookpad.com/recipe/3284570> [retrieved on 20230123]
- ANONYMOUS: "The popularity of beauty, health and even dieting is soaring! Introducing how to eat delicious oatmeal", FOOD-DRINK.PINTORU, 8 September 2015 (2015-09-08), pages 1 - 3, XP093016634, Retrieved from the Internet <URL:https://web.archive.org/web/20150908050311/http://food-drink.pintoru.com/oatmeal/quick-oats/> [retrieved on 20230123]
- ANONYMOUS: "Oatmeal chicken breast hamburger", 15 September 2020 (2020-09-15), pages 1 - 9, XP093016606, Retrieved from the Internet <URL:https://oatmeal-recipe.online/?p=745> [retrieved on 20220711]
- ANONYMOUS: "eclipse premium pure oatmeal 300g", 4 November 2020 (2020-11-04), pages 1 - 3, XP093016617, Retrieved from the Internet <URL:https://web.archive.org/web/20201104142512/www.nihonshokuhin.co.jp/oatmeal/premium_pure_oatmeal.html> [retrieved on 20220711]
- LITTLE DARLING: "[Meatloaf] American Mom's Taste", 2 July 2013 (2013-07-02), pages 1 - 4, XP093016625, Retrieved from the Internet <URL:https://www.recipe-blog.jp/profile/12423/recipe/612897> [retrieved on 20220711]
- ANONYMOUS: "The popularity of beauty, health and even dieting is soaring! Introducing how to eat delicious oatmeal", 8 September 2015 (2015-09-08), pages 1 - 3, XP093016634, Retrieved from the Internet <URL:https://web.archive.org/web/20150908050311/http://food-drink.pintoru.com/oatmeal/quick-oats/> [retrieved on 20220711]
- KOENYAN: "frying pan meatloaf", 8 July 2015 (2015-07-08), pages 1 - 3, XP093016637, Retrieved from the Internet <URL:https://cookpad.com/recipe/3284570> [retrieved on 20220711]
- ANONYMOUS: "What is rolled barley?", 28 March 2019 (2019-03-28), pages 1 - 10, XP093016641, Retrieved from the Internet <URL:https://tubutubu-officialblog.net/2019/03/28/4151> [retrieved on 20220711]
- ANONYMOUS: "Mochi barley, round barley, rolled barley, barley, what is the difference?", 30 November 2020 (2020-11-30), pages 1 - 6, XP093016650, Retrieved from the Internet <URL:https://www.hakubaku.co.jp/omugi-lab/hyakka/kakouhou/> [retrieved on 20220711]
- RIKA5: "Fluffy hamburg steak without bread crumbs", 5 November 2012 (2012-11-05), pages 1 - 3, XP093016654, Retrieved from the Internet <URL:https://cookpad.com/recipe/2016987> [retrieved on 20220711]

## Description

### [Technical Field]

The present invention relates to a method for producing grain mixed ground meat.

### [Background Art]

Meat-like food such as a 100% vegetable based hamburger and sausage not containing meat but made from soy beans or konjac is demanded to some extent by not only kidney disease patients under restriction of protein intake but also vegetarians and health conscious consumers.

As an example of a method for producing such meat-like food, Patent Literature 1 describes a method for producing low-protein meat-like food containing insoluble dietary fiber of barley, corn, or the like, and a konjac flour. Another process for the production of extended meat is disclosed in US 3 952 111 A: flaked wheat kernels are moisture-cooked, kneaded and ground before incorporation into ground meat.

On the other hand, there are needs for enjoying meat diet in consideration of health consciousness although 100% vegetable based meat-like food is not needed but meat diet is not denied. In such a case, for reducing the amount of meat to be used, ingredients other than meat can be mixed with meat (particularly, ground meat of beef, pork, chicken or the like). When ingredients used in conventional meat-like food are mixed with ground meat in a prescribed ratio, however, the original texture, flavor, and appearance of meat may be impaired in some cases. Besides, for example, when whole grains are directly mixed with ground meat, the resultant texture and flavor become different from those of the original meat, and since the grain shape of the mixed grain can be visually recognized, the appearance may be different in some cases. In addition, for example, when a powder of grain such as flour is mixed, the powder absorbs moisture to be changed to a paste, which may impair the texture and flavor, and appearance in some cases.

### [Citation List]

### [Patent Literature]

[Patent Literature 1] Japanese Patent Laid-Open No. 2011-142881

### [Summary of Invention]

### [Technical Problem]

Development of novel food capable of reducing the amount of ground meat to be used, and retaining the original texture, flavor and appearance of ground meat has been expected.

The present invention was devised in consideration of these circumstances, and an object is to provide a method for producing grain mixed ground meat, processed grain, and grain mixed ground meat in which texture, flavor and appearance can be adjusted, the amount of ground meat to be used can be reduced, and a nutrient of grain can be added.

### [Solution to Problem]

For achieving the above-described object, a method for producing grain mixed ground meat according to a first aspect of the present invention includes:
1) A step (A) of steaming grain having been shed and polished and cut into 2 to 15 pieces, or cut into a size of 1.5 to 12.0 mm in terms of a sieve opening size;
   A step (B) of flaking the grain having been steamed in the foregoing step to a thickness of 0.3 to 2.4 mm;
   A step (C) of drying or roasting the grain having been flaked in the foregoing step to obtain processed grain having a moisture value of 14% or less; and
   A step (D) of mixing the processed grain obtained in the foregoing step with ground meat to obtain grain mixed ground meat.
   Alternatively:
      A step (A) of steaming grain having been shed and polished;
      A step (B) of flaking the grain having been steamed in the foregoing step to a thickness of 0.3 to 2.4 mm;
      A step (C) of drying or roasting the grain having been flaked in the foregoing step to obtain processed grain having a moisture value of 14% or less, and cutting into 2 to 15 pieces, or cutting into a size of 1.5 to 12.0 mm in terms of a sieve opening size; and
      A step (D) of mixing the processed grain obtained in the foregoing step with ground meat to obtain grain mixed ground meat.

The grain is flaked to a thickness of 0.3 to 2.4 mm in the step (B).

The method includes a step of cutting the grain.

The grain is steamed in the step (A) after the grain having been shed and polished is cut.

The grain is cut in the step (C) to obtain the processed grain after the grain having been flaked in the step (B) is dried or roasted.

The grain is cut into 2 to 15 pieces, or cut into a size of 1.5 to 12.0 mm in terms of a sieve opening size.

Also disclosed but not part of the invention as claimed, is processed grain having been steamed and flaked to be mixed with ground meat.

Also disclosed but not part of the invention as claimed, is processed grain having been steamed, flaked, and cut to be mixed with ground meat.

Also disclosed but not part of the invention as claimed, is processed grain having been steamed and flaked and having a thickness of 0.3 to 2.4 mm to be mixed with ground meat.

Also disclosed but not part of the invention as claimed, is grain mixed ground meat obtained by the method the present invention.

### [Advantageous Effects of Invention]

According to the present invention, a method for producing grain mixed ground meat, in which texture, flavor and appearance can be adjusted, an amount of ground meat to be used can be reduced, and a nutrient of grain can be added can be provided.

### [Brief Description of Drawings]

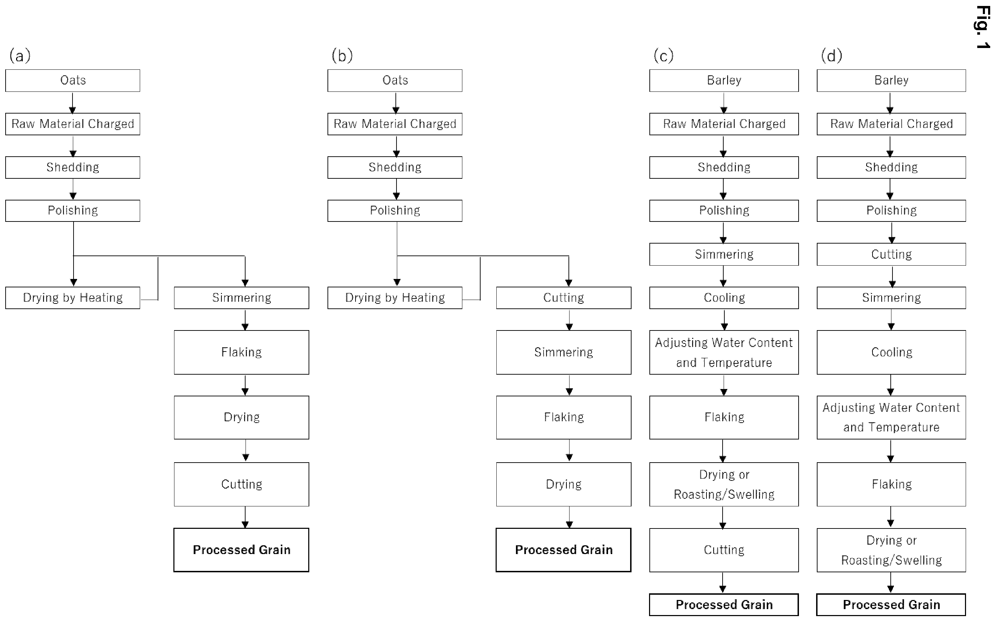

[Figure 1] Figure 1 illustrates diagrams exemplifying production processes of processed grain used in grain mixed ground meat, wherein Figure 1(a) is a diagram illustrating a production process (of cutting after drying) of processed grain obtained using oats, Figure 1(b) is a diagram illustrating a production process (of cutting between shedding/polishing and steaming) of the processed grain obtained using oats, Figure 1(c) is a diagram illustrating a production process (cutting after drying or roasting) of the processed grain obtained using barley, and Figure 1(d) is a diagram illustrating a production process (cutting before steaming) of the processed grain obtained using barley.
[Figure 2] Figure 2 is a photograph of a cooked hamburger of an example.
[Figure 3] Figure 3 is a photograph of a cooked hamburger of an example.
[Figure 4] Figure 4 is a photograph of a cooked shaomai of an example.
[Figure 5] Figure 5 is a photograph of a cooked meatball of an example.
[Figure 6] Figure 6 illustrates photographs of processed oats of an example, wherein Figure 6(a) is a photograph of the food obtained by cutting into 2 pieces, Figure 6(b) is a photograph of the food obtained by cutting into 4 pieces, and Figure 6(c) is a photograph of the food obtained by cutting into 6 pieces.

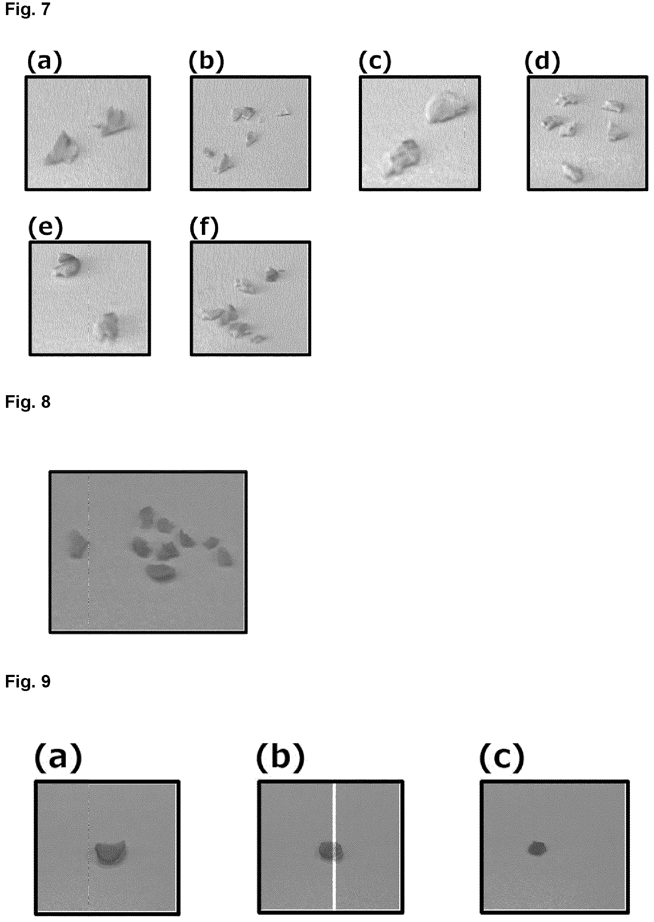

[Figure 7] Figure 7 illustrates photographs of processed oats of an example, wherein Figure 7(a) is a photograph of the food obtained by flaking to 0.4 mm/cutting into 2 pieces, Figure 7(b) is a photograph of the food obtained by flaking to 0.4 mm/cutting into 6 pieces, Figure 7(c) is a photograph of the food obtained by flaking to 0.9 mm/cutting into 2 pieces, Figure 7(d) is a photograph of the food obtained by flaking to 0.9 mm/cutting into 6 pieces, Figure 7(e) is a photograph of the food obtained by flaking to 1.2 mm/cutting into 2 pieces, and Figure 7(f) is a photograph of the food obtained by flaking to 1.2 mm/cutting into 6 pieces.
[Figure 8] Figure 8 is a photograph of processed corn of an example.
[Figure 9] Figure 9 illustrates photographs of processed corn of an example, wherein Figure 9(a) is a photograph of the food obtained by flaking to 0.5 mm, Figure 9(b) is a photograph of the food obtained by flaking to 0.8 mm, and Figure 9(c) is a photograph of the food obtained by flaking to 1.2 mm.
[Figure 10] Figure 10 illustrates photographs of processed corn of an example, wherein Figure 10(a) is a photograph of the food obtained by flaking to 0.5 mm,
Figure 10(b) is a photograph of the food obtained by flaking to 0.8 mm, and Figure 10(c) is a photograph of the food obtained by flaking to 1.2 mm.

### [Description of Embodiments]

### (1. Method for Producing Grain Mixed Ground meat)

A method for producing grain mixed ground meat of the present invention includes:
A step (A) of steaming grain having been shed and polished and cut into 2 to 15 pieces, or cut into a size of 1.5 to 12.0 mm in terms of a sieve opening size;
A step (B) of flaking the grain having been steamed in the foregoing step to a thickness of 0.3 to 2.4 mm;
A step (C) of drying or roasting the grain having been flaked in the foregoing step to obtain processed grain having a moisture value of 14% or less; and
A step (D) of mixing the processed grain obtained in the foregoing step with ground meat to obtain grain mixed ground meat.
Alternatively:
   A step (A) of steaming grain having been shed and polished;
   A step (B) of flaking the grain having been steamed in the foregoing step to a thickness of 0.3 to 2.4 mm;
   A step (C) of drying or roasting the grain having been flaked in the foregoing step to obtain processed grain having a moisture value of 14% or less, and cutting into 2 to 15 pieces, or cutting into a size of 1.5 to 12.0 mm in terms of a sieve opening size; and
   A step (D) of mixing the processed grain obtained in the foregoing step with ground meat to obtain grain mixed ground meat.

By the method for producing grain mixed ground meat of the present invention, grain mixed ground meat in which texture, flavor and appearance can be adjusted, an amount of ground meat to be used can be reduced, and a nutrient of grain can be added can be produced.

Examples of the grain used in the present invention include not only grains of the *Poaceae* family such as brown rice, barley, wheat, oats, rye, adlay, millet, Japanese barnyard millet, and corn but also buckwheat, Amaranthus, quinoa, and soy beans. Herein, the "grain having been shed and polished" may be precedently processed grain, and encompasses, for example, corn grits, cornmeal, rolled oats and the like.

In the step (A), the grain having been shed and polished is steamed. Since the grain is made soft and elastic by adding moisture thereto through the steaming, the grain can be rolled out without being crushed by flaking in the step (B) described below. After polishing, drying by heating may be performed for purposes of stabilizing bran present on the surfaces of grains, and the drying by heating can be employed when the grains are temporarily stored or when a batch operation is required. In such a case, the steaming can be performed after the drying by heating. Besides, the grain may be cooled after the steaming, or a water content and a temperature may be adjusted to desired extents.

As a specific method for the steaming, for example, the steaming may be performed under steam (100°C) for several tens of minutes, or may be performed under pressure of 1 atm or more at a temperature of 100°C or more for 30 minutes or more. In consideration of the type of the grain, and a mixing ratio with ground meat, the method can be appropriately changed.

In the step (B), the grain having been steamed in the step (A) is flaked. Examples of a specific method for the flaking include a method in which the grain is caused to pass between rotating rollers to be flaked, and a method in which a flat plate of an iron plate or the like is pressed against the grain for flaking. The grain is flaked to a thickness of 0.3 to 2.4 mm.

In the step (C), the grain having been flaked in the step (B) is dried or roasted to obtain processed grain.

Examples of a specific method for the drying include a hot air drying method; a roasting method on a heated iron plate or the like; a drying method under reduced pressure; a sun drying method; a natural drying method; and a freeze drying method, and the method can be appropriately selected in consideration of the type of the grain, a mixing ratio with ground meat, and the like. It is noted that the drying is performed to obtain a moisture value in the grain of 14% or less.

Examples of a specific method for the roasting include a hot air blasting method; a roasting method on a heated iron plate or the like; and a method using direct heating, a heat ray or the like. It is noted that the grain may be swollen when roasted. Besides, for purposes of, for example, increasing aroma; adjusting texture; or adjusting appearance color, a step of further roasting the grain (for example, at 120°C or more for 5 seconds or more) may be included after roasting or after swelling through roasting.

The method for producing grain mixed ground meat of the present invention includes a step of cutting the grain.

The grain having been shed and polished is cut, and then steamed in the step (A), or the grain having been flaked in the step (B) is dried or roasted and then cut in the step (C) to obtain processed grain.

Examples of a specific method for the cutting include a method using a cutting blade (cutting machine); a method in which the grain is smashed against some sort of surface to be crushed, and the resultant is sifted; and a method in which the grain is pressed against a sieve, and the method can be appropriately selected in consideration of the type of the grain, a mixing ratio with ground meat, and the like.

According to the present invention, the grain is cut into 2 to 15 pieces, or cut into a size of 1.5 to 12.0 mm in terms of a sieve opening size. The cutting size can be appropriately selected in consideration of the type of the grain, a mixing ratio with ground meat, texture and the like.

Processes before obtaining processed grain will be described by exemplarily illustrating the processes in Figure 1.

An example of processes for obtaining processed grain using oats will be described (Figure 1(a)). Oats are charged in a shedding apparatus to remove hull (shedding), and then, the resultant is polished with a polishing apparatus. The oats having been shed and polished are dried by heating, and then steamed under saturated steam at 100°C or more for several tens of minutes. The oats thus steamed are flaked to a thickness of 0.4 to 1.2 mm, and then dried. The oats thus dried are cut into 2 to 6 pieces to obtain processed grain.

Another example of the processes for obtaining processed grain using oats will be described (Figure 1(b)). Oats are charged in a shedding apparatus to remove hull (shedding), and then, the resultant is polished with a polishing apparatus. The oats having been shed and polished are cut into 2 to 6 pieces, and then, steamed under saturated steam at 100°C or more for several tens of minutes. The oats thus steamed are flaked to a thickness of 0.4 to 1.2 mm, and then dried to obtain processed grain.

A still another example of the processes for obtaining processed grain using barley will be described (Figure 1(c)). Barley having been shed and polished is charged in a high pressure furnace to be steamed at 110 to 140°C. The barley thus steamed is cooled, adjusted to prescribed water content and temperature, and then flaked to a thickness of 0.5 to 1.5 mm. The barley thus flaked is dried or roasted at 200°C or more for 20 seconds (to be swollen), and then, the resultant is cut into a size of 1.5 to 12.0 mm in terms of a sieve opening size to obtain processed grain.

A still another example of the processes for obtaining processed grain using barley will be described (Figure 1(d)). Barley having been shed and polished is cut into 2 to 4 pieces, and then charged in a high pressure furnace to be steamed at 110 to 140°C. The barley thus steamed is cooled, adjusted to prescribed water content and temperature, and then flaked to a thickness of 0.5 to 1.5 mm. The barley thus flaked is dried, or roasted at 200°C or more for 20 seconds (to be swollen) to obtain processed grain.

In the step (D) of the method for producing grain mixed ground meat of the present invention, the processed grain obtained in the step (C) is mixed with ground meat to obtain grain mixed ground meat. Examples of the ground meat used in the present invention include ground meat for meat processed food such as a hamburger, a meat ball, a meatball, a gyoza, a meat bun, a shaomai, a Japanese potato croquette, a ground meat cutlet, a hamburger patty, a terrine, a patty, and corned beef; ground meat for a sausage, a ham, a steak, yakiniku, roast beef, shabushabu, fried chicken, and jerky; and ground meat for flavored ground meat, flavored ground meat for taco rice, and a meat sauce. Besides, in the present invention, the grain mixed ground meat can be processed into any shape in accordance with a form of target food, such as a block shape, a shape of thick cut meat, a shape of sliced meat, or a minced form, and in addition, can be cooked with heat similarly to meat by grilling, boiling, frying, deep frying, steaming and the like.

A mixing ratio between ground meat and the processed grain can be appropriately adjusted to, for example, ground meat:processed grain of 95:5, 90:10, 85:15, 80:20, 75:25, 70:30, 65:35, 60:40, 55:45, 50:50, 45:55, 40:60, 35:65, 30:70, 25:75, 20:80, 15:85, 10:90, 5:95 or the like. For example, when the texture of meat is desired to be enhanced to increase the amount of meat juice, the ratio of ground meat:processed grain is set to 90:10; and when the amount of nutrients of grain is desired to increase to enhance a healthy aspect of the grain, the ratio of ground meat:processed grain is set to 20:80. Thus, the mixing ratio between ground meat and the processed grain can be appropriately changed in accordance with the purpose of a final product of the grain mixed ground meat.

As the processed grain to be mixed with ground meat, for example, only processed grain obtained through the same process may be used (for example, only the processed grain obtained through the process exemplified in Figure 1(a) may be used), or a mixture of processed grain respectively obtained through different processes may be used (for example, a mixture of the processed grain obtained through the process exemplified in Figure 1(a) and the processed grain obtained through the process exemplified in Figure 1(b) may be used). Besides, only processed grain obtained from the same type of grain may be used (for example, only processed grain obtained from oats may be used), or a mixture of processed grain respectively obtained from two or more types of grain may be used (for example, a mixture of processed grain obtained from oats, and processed grain obtained from barley may be used).

As for timing of mixing ground meat with the processed grain, for example, a method (i) in which ground meat is obtained by grinding meat, and the processed grain is mixed with the ground meat, or a method (ii) in which the processed grain is precedently added to meat, and the resultant meat is ground to obtain ground meat mixed with the processed grain can be employed.

In the present invention, ground meat may further include, as a constituent raw material, water, a fat or oil, a seasoning (including an umami component such as an amino acid), an acidulant, a bittering agent, spices, a sweetener, an antioxidant, a colorant, a coloring agent, a perfume, a stabilizer, a preservative, an enzyme, a swelling agent, a gelling agent, and the like if necessary in addition to the processed grain.

### (2. Processed grain)

According to the method of the present invention, the processed grain is mixed with ground meat, and is processed grain having been steamed and flaked and having a thickness of 0.3 to 2.4 mm. The detailed description of the grain, the ground meat, the steaming and the flaking is the same as that given above.

### (3. Grain Mixed Ground meat)

Grain mixed ground meat obtained by the method of the present invention includes the above-described processed grain and is obtained by mixing the processed grain with ground meat. The detailed description of the ground meat is the same as that given above, the grain mixed ground meat can be processed into any shape in accordance with a form of target food, such as a block shape, a shape of thick cut meat, a shape of sliced meat, or a minced form, and in addition, can be cooked with heat similarly to meat by grilling, boiling, frying, deep frying, steaming or the like.

A mixing ratio between the ground meat and the processed grain, the timing of mixing the processed grain with the ground meat, and an ingredient to be included as a constituent raw material are the same as those described above.

### (4. Summary)

As described so far, a method for producing grain mixed ground meat, processed grain, and grain mixed ground meat in which texture, flavor and appearance can be adjusted, an amount of ground meat to be used can be reduced, and a nutrient of grain can be added can be provided.

According to the present invention, the texture, the flavor, the appearance and the fillingness of the grain mixed ground meat can be adjusted to desired levels by changing the thickness of flaking the grain, the size of cutting it, the extent of drying or roasting it, the mixing ratio with the processed grain, and the like.

For example, when processed grain obtained by flaking the grain to a large thickness and cut the grain into a large size is mixed with ground meat, grain mixed ground meat that can be felt sufficiently filling can be realized. On the other hand, when processed grain obtained by flaking the grain to a small thickness and cut the grain into a small size is mixed with ground meat, grain mixed ground meat having the original texture and appearance of the ground meat retained can be realized.

For example, when processed grain obtained by setting the degree of drying high is mixed with ground meat, grain mixed ground meat having definite chewy texture can be realized, and for example, when processed grain obtained by setting the degree of roasting high is mixed with ground meat, grain mixed ground meat provided with aromatic flavor and a deep colored appearance can be realized.

As for the mixing ratio between ground meat and the processed grain, for example, when a mixing ratio of the processed grain is low, grain mixed ground meat having the texture of meat enhanced and including a large amount of meat juice can be realized, and when the mixing ratio of the processed grain is high, grain mixed ground meat in which nutrients of the grain are increased and a healthy aspect of the grain is enhanced can be realized.

Besides, according to the present invention, soy beans, konjac, okara and the like used in conventional meat-like food are not used, but the processed grain is mixed, and thus, grain mixed ground meat comparable in the original texture, appearance, taste, aroma and fillingness of ground meat can be obtained. When the processed grain is mixed with ground meat in a desired ratio, an amount of meat to be used is reduced to reduce a lipid content, and nutrients (dietary fiber and the like) of the grain not originally contained in the meat can be simultaneously added, and as a result, grain mixed ground meat contributing to health promotion of consumers can be provided.

### [Examples]

Now, the present invention will be specifically described by way of examples. It is noted that the present invention is not limited to these examples.

### (Example 1)

Oats were charged in a shedding apparatus to remove hull (shedding), and then polished with a polishing apparatus. The oats thus polished were boiled with steam (100°C) for several tens of minutes, and then flaked to a thickness of 0.9 mm with a heated flaking roller. Thereafter, the resultant was dried by hot air drying to a moisture value of 14% or less, and then cut into 4 pieces with a cutting machine to obtain processed oats.

The processed oats (processed grain) obtained as described above was mixed with ground beef and pork in a ratio of 1:1 (content of the processed grain: 50%), and the resultant was formed into a hamburger shape. This hamburger was grilled to be used in the following sensory test.

The sensory test was conducted by three panelists in accordance with the following scoring criteria. As a control, a commercially available hamburger having been grilled was used. Evaluation items were 5 items of "appearance", "aroma", "taste", "texture", and "fillingness". The scores of the 3 panelists were added up to calculate an average for each evaluation item.
5: equivalent to control
4: slightly different from control
3: rather different from control
2: different from control
1: greatly different from control

Results of the sensory test are shown in Table 1. The averages of all the 5 items of "appearance", "aroma", "taste", "texture", and "fillingness" were 4 (slightly different from control) or more. In particular, the averages were high in "appearance" and "fillingness", and thus, the hamburger of this example was comparable to the hamburger used as the control.

**[Table 1]**

| Evaluation Item | Panelist 1 | Panelist 1 | Panelist 1 | Average |
|---|---|---|---|---|
| Appearance | 3 | 5 | 5 | 4.3 |
| Aroma | 4 | 4 | 4 | 4.0 |
| Taste | 4 | 3 | 5 | 4.0 |
| Texture | 3 | 4 | 5 | 4.0 |
| fillingness | 4 | 4 | 5 | 4.3 |

In this manner, the hamburger obtained by mixing the processed grain of the present example with ground meat in a ratio of 50% and grilling the resultant was comparable to the commercially available hamburger in "appearance", "aroma", "taste", "texture", and "fillingness", and it was revealed that an amount of meat to be used can be reduced by using the processed grain of the present example.

### (Example 2)

Oats were charged in a shedding apparatus to remove hull (shedding), and then polished with a polishing apparatus. The oats thus polished were cut into 6 pieces with a cutting machine. The resultant was boiled with steam (100°C) for several tens of minutes, and then flaked to a thickness of 1.2 mm with a heated flaking roller. Thereafter, the resultant was dried by hot air drying to a moisture value of 14% or less to obtain processed oats.

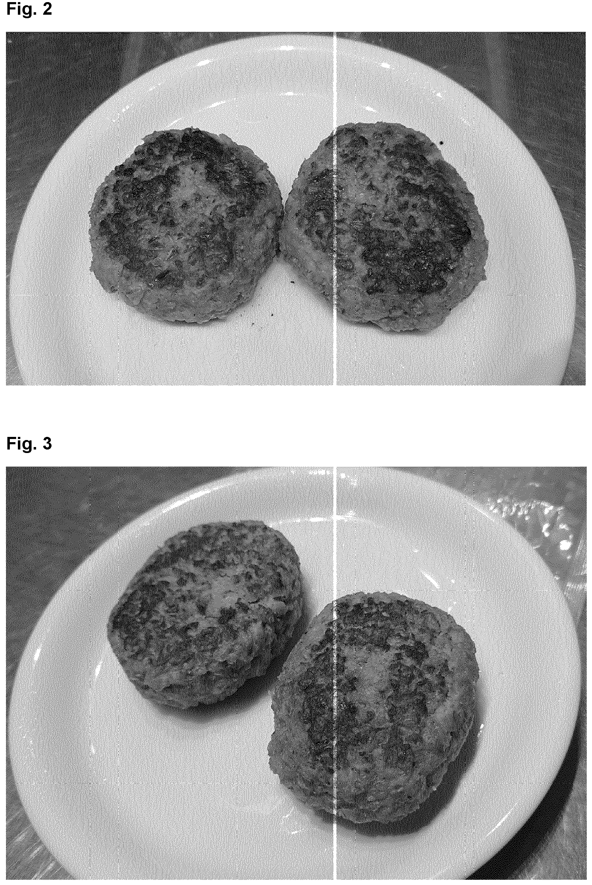

The processed oats (processed grain) obtained as described above was mixed with ground beef and pork (beef: 75%, pork: 25%) in a ratio of 2:3 (content of the processed grain: 40%), and the resultant was formed into a hamburger shape. This hamburger was grilled to be used in the following sensory test. Figure 2 is a photograph of the hamburger of this example thus cooked.

The sensory test was conducted by four panelists in accordance with the following scoring criteria. As a control, a commercially available hamburger having been grilled was used. Evaluation items were 6 items of "appearance", "aroma", "taste", "texture", "chewy texture" and "feeling of satisfaction". The scores of the four panelists were added up to calculate an average for each evaluation item.
5: equivalent to control
4: slightly different from control
3: rather different from control
2: different from control
1: greatly different from control

Results of the sensory test are shown in Table 2. All the panelists evaluated the hamburger as "5: equivalent to control" in "appearance", "aroma", "texture", "chewing texture" and "feeling of satisfaction". Besides, "taste" was evaluated as an average of 4 (slightly different from control) or more, and thus, the hamburger of this example was comparable to the hamburger used as the control.

**[Table 2]**

| | Panelist 1 | Panelist 2 | Panelist 3 | Panelist 4 | Average |
|---|---|---|---|---|---|
| Appearance | 5 | 5 | 5 | 5 | 5.0 |
| Aroma | 5 | 5 | 5 | 5 | 5.0 |
| Taste | 4 | 4 | 5 | 5 | 4.5 |
| Texture | 5 | 5 | 5 | 5 | 5.0 |
| Chewy Texture | 5 | 5 | 5 | 5 | 5.0 |
| Feeling of Satisfaction | 5 | 5 | 5 | 5 | 5.0 |

In this manner, the hamburger obtained by mixing the processed grain of the present example with ground meat in a ratio of 40% and grilling the resultant provided "appearance", "aroma", "texture", "chewy texture" and "feeling of satisfaction" equivalent to those of the commercially available hamburger, and was comparable in "taste", and it was thus revealed that an amount of meat to be used can be reduced by using the processed grain of the present example.

### (Example 3)

The processed oats (processed grain) obtained in Example 2 was mixed with ground beef (beef: 100%) in a ratio of 2:3 (content of the processed grain: 40%), and the resultant was formed into a hamburger shape. This hamburger was grilled to be used in the following sensory test. Figure 3 is a photograph of the hamburger of this example thus cooked.

The sensory test was conducted by four panelists in accordance with the same scoring criteria as those of Example 2. As a control, a commercially available hamburger having been grilled was used.

Results of the sensory test are shown in Table 3. All the panelists evaluated the hamburger as "5: equivalent to control" in "appearance", "aroma", and "chewing texture". Besides, "taste", "texture", and "feeling of satisfaction" were evaluated as an average of 4 (slightly different from control) or more, and thus, the hamburger of this example was comparable to the hamburger used as the control.

**[Table 3]**

| | Panelist 1 | Panelist 2 | Panelist 3 | Panelist 4 | Average |
|---|---|---|---|---|---|
| Appearance | 5 | 5 | 5 | 5 | 5.0 |
| Aroma | 5 | 5 | 5 | 5 | 5.0 |
| Taste | 4 | 4 | 5 | 5 | 4.5 |
| Texture | 3 | 5 | 5 | 5 | 4.5 |
| Chewy Texture | 5 | 5 | 5 | 5 | 5.0 |
| Feeling of Satisfaction | 4 | 5 | 5 | 5 | 4.8 |

In this manner, the hamburger obtained by mixing the processed grain of the present example with ground meat in a ratio of 40% and grilling the resultant was equivalent to the commercially available hamburger in "appearance", "aroma", and "chewy texture", and was comparable in "taste", "texture", and "feeling of satisfaction", and it was revealed that an amount of meat to be used can be reduced by using the processed grain of the present example.

### (Example 4)

Processed corn (corn grits) was charged in a high pressure furnace to be steamed at 130°C for 105 minutes. The corn thus steamed was cooled, adjusted to prescribed water content and temperature, and flaked to a thickness of 1.5 mm with a flaking roller. The corn thus flaked was dried by hot air drying to a moisture value of 14% or less, and the resultant was cut into a size of 3.23 mm in terms of a sieve opening size to obtain processed corn.

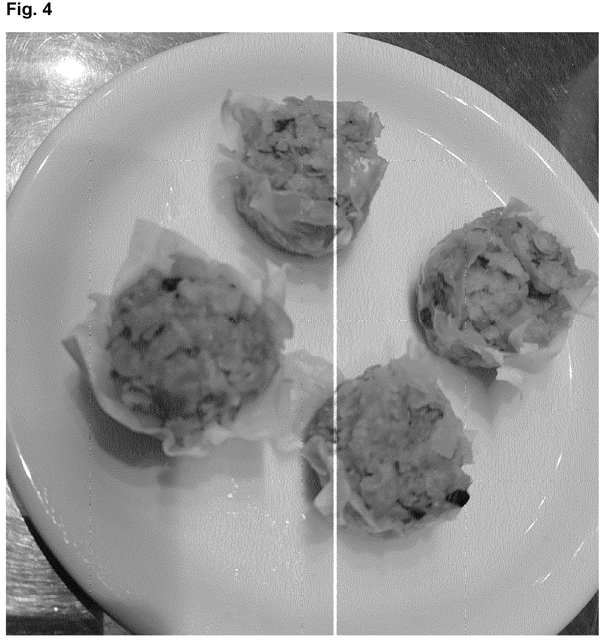

The processed corn (processed grain) obtained as described above was mixed with ground pork in a ratio of 2:3 (content of the processed grain: 40%), and the resultant was wrapped with a shaomai skin. The resultant shaomai was steamed to be used in the following sensory test. Figure 4 is a photograph of the shaomai of this example thus cooked.

The sensory test was conducted by four panelists in accordance with the same scoring criteria as those of Example 2. As a control, a commercially available shaomai having been steamed was used.

Results of the sensory test are shown in Table 4. "Aroma", "taste", "texture", "chewy texture", and "feeling of satisfaction" were evaluated as an average of 4 (slightly different from control) or more, and thus, the shaomai of this example was comparable to the shaomai used as the control.

**[Table 4]**

| | Panelist 1 | Panelist 2 | Panelist 3 | Panelist 4 | Average |
|---|---|---|---|---|---|
| Appearance | 4 | 4 | 3 | 4 | 3.8 |
| Aroma | 3 | 5 | 3 | 5 | 4.0 |
| Taste | 4 | 5 | 4 | 5 | 4.5 |
| Texture | 4 | 4 | 4 | 5 | 4.3 |
| Chewy Texture | 4 | 5 | 4 | 5 | 4.5 |
| Feeling of Satisfaction | 5 | 5 | 4 | 5 | 4.8 |

In this manner, the shaomai obtained by mixing the processed grain of the present example with ground meat in a ratio of 40% and cooking the resultant was comparable to the commercially available shaomai in "aroma", "taste", "texture", "chewy texture" and "feeling of satisfaction", and it was revealed that an amount of meat to be used can be reduced by using the processed grain of the present example.

### (Example 5)

Processed corn (corn grits) was charged in a high pressure furnace to be steamed at 130°C for 100 minutes. The corn thus steamed was cooled, adjusted to prescribed water content and temperature, and flaked to a thickness of 1.5 mm with a flaking roller. The corn thus flaked was roasted (to be swollen) with a roasting apparatus at 250°C for 5 seconds to set a moisture value to 7% or less, and thereafter, the resultant was cut into a size of 2 mm in terms of a sieve opening size to obtain processed corn 1.

Processed corn (corn grits) was cut into 6 pieces with a cutting machine, and the resultant was charged in a high pressure furnace to be steamed at 130°C for 60 minutes. The corn thus steamed was cooled, adjusted to prescribed water content and temperature, and flaked to a thickness of 1.0 mm with a flaking roller. Thereafter, the resultant was roasted (to be swollen) with a roasting apparatus at 250°C for 5 seconds to set a moisture value to 7% or less, and thus processed corn 2 was obtained.

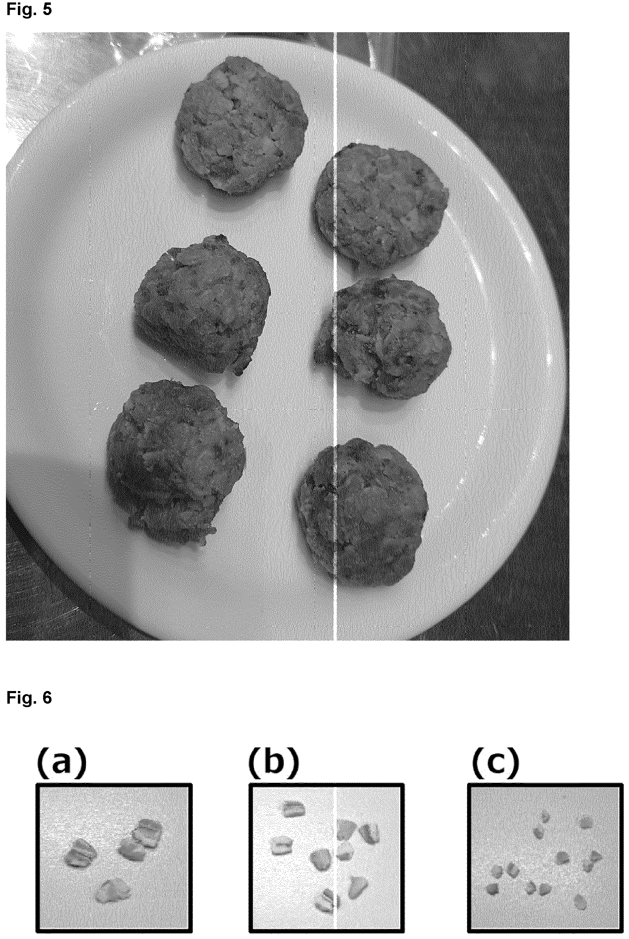

The processed corn 1 (processed grain) and the processed corn 2 (processed grain) obtained as described above were mixed with ground pork in a ratio of 13:13:40 (content of the processed grain: 39%), and the resultant was formed into a meatball shape. The meatball was grilled to be used in the following sensory test. Figure 5 is a photograph of the meatball of this example thus cooked.

The sensory test was conducted by four panelists in accordance with the same scoring criteria as those of Example 2. As a control, a commercially available meatball having been grilled was used.

Results of the sensory test are shown in Table 5. All the panelists evaluated the meatball as "5: equivalent to control" in "feeling of satisfaction". In addition, "aroma", "taste", "texture", and "chewy texture" were evaluated as an average of 4 (slightly different from control) or more, and thus, the meatball of this example was comparable to the meatball used as the control.

**[Table 5]**

| | Panelist 1 | Panelist 2 | Panelist 3 | Panelist 4 | Average |
|---|---|---|---|---|---|
| Appearance | 3 | 4 | 4 | 3 | 3.5 |
| Aroma | 3 | 5 | 5 | 5 | 4.5 |
| Taste | 4 | 5 | 4 | 5 | 4.5 |
| Texture | 3 | 4 | 4 | 5 | 4.0 |
| Chewy Texture | 4 | 5 | 4 | 5 | 4.5 |
| Feeling of Satisfaction | 5 | 5 | 5 | 5 | 5.0 |

In this manner, the meatball obtained by mixing the processed grain of the present example with ground meat in a ratio of 39% and grilling the resultant was equivalent to the commercially available meatball in "feeling of satisfaction", and was comparable in "aroma", "taste", "texture", and "chewy texture", and it was revealed that an amount of meat to be used can be reduced by using the processed grain of the present example.

### (Example 6)

Processed grains derived from various grains were prepared, sizes of the resultants were measured, and appearances thereof were photographed.

### (1. Oats: flaking followed by cutting)

Oats (whole oats) were charged in a shedding apparatus to remove hull (shedding), and then polished with a polishing apparatus. The oats thus polished were boiled with steam (100°C) for several tens of minutes, and then flaked to a thickness of 1.2 mm with a heated flaking roller. Thereafter, the resultant was dried by hot air drying to a moisture value of 14% or less, and the resultant was cut into 2 pieces, 4 pieces, or 6 pieces with a cutting machine to obtain processed oats.

The sizes and the appearances (photographs) of the respective processed oats obtained as described above were as follows:
Food cut into 2 pieces: 4.26 mm in length, 4.23 mm in width, and 1.2 mm in thickness (Figure 6(a))
Food cut into 4 pieces: 4.35 mm in length, 2.45 mm in width, and 1.2 mm in thickness (Figure 6(b))
Food cut into 6 pieces: 2.28 mm in length, 2.31 mm in width, and 1.18 mm in thickness (Figure 6(c))

### (2. Oats: cutting followed by flaking)

Oats were charged in a shedding apparatus to remove hull (shedding), and then polished with a polishing apparatus. The oats thus polished were cut into 2 pieces or 6 pieces with a cutting machine. The resultant was boiled with steam (100°C) for several tens of minutes, and then flaked to a thickness of 0.4 mm, 0.9 mm or 1.2 mm with a heated flaking roller. Thereafter, the resultant was dried by hot air drying to a moisture value of 14% or less to obtain processed oats.

The sizes and appearances (photographs) of the respective processed oats obtained as described above were as follows:
Food flaked to 0.4 mm and cut into 2 pieces: 5.9 mm in length, 4.45 mm in width, and 0.38 mm in thickness (Figure 7(a))
Food flaked to 0.4 mm and cut into 6 pieces: 3.1 mm in length, 2.2 mm in width, and 0.41 mm in thickness (Figure 7(b))
Food flaked to 0.9 mm and cut into 2 pieces: 5.56 mm in length, 4.25 mm in width, and 0.89 mm in thickness (Figure 7(c))
Food flaked to 0.9 mm and cut into 6 pieces: 3.65 mm in length, 1.95 mm in width, and 0.87 mm in thickness (Figure 7(d))
Food flaked to 1.2 mm and cut into 2 pieces: 4.73 mm in length, 3.29 mm in width, and 1.18 mm in thickness (Figure 7(e))
Food flaked to 1.2 mm and cut into 6 pieces: 2.07 mm in length, 1.75 mm in width, and 1.14 mm in thickness (Figure 7(f))

### (3. Corn: flaking followed by cutting)

Processed corn (corn grits) was charged in a high pressure furnace to be steamed at 130°C for 100 minutes. The corn thus steamed was cooled, adjusted to prescribed water content and temperature, and then flaked to a thickness of 0.5 mm with a flaking roller. The corn thus flaked was roasted (to be swollen) at 250°C for 5 seconds with a roasting apparatus to set a moisture value to 7% or less, and thereafter, the resultant was cut into 9 US mesh (2 mm in terms of a sieve opening size) to obtain processed corn.

The size and appearance (photograph) of the processed corn obtained as described above were as follows:
2.63 mm in length, 1.83 mm in width, and 0.87 mm in thickness (Figure 8)

### (4. Corn: cutting followed by flaking (drying))

Processed corn (corn grits) was cut into 6 to 8 pieces with a cutting machine, and the resultant was charged in a high pressure furnace to be steamed at 130°C for 60 minutes. The corn thus steamed was cooled, adjusted to prescribed water content and temperature, and then flaked to a thickness of 0.5 mm, 0.8 mm, or 1.2 mm with a flaking roller. Thereafter, the resultant was dried by hot air drying to a moisture value of 14% or less to obtain processed corn.

The sizes and appearances (photographs) of the respective processed corn obtained as described above were as follows:
Food flaked to 0.5 mm: 9.37 mm in length, 7.67 mm in width, and 0.51 mm in thickness (Figure 9(a))
Food flaked to 0.8 mm: 6.66 mm in length, 6.55 mm in width, and 0.82 mm in thickness (Figure 9(b))
Food flaked to 1.2 mm: 4.49 mm in length, 4.13 mm in width, and 1.19 mm in thickness (Figure 9(c))

### (5. Corn: cutting followed by flaking (roasting/swelling))

Processed corn (corn grits) was cut into 6 to 8 pieces with a cutting machine, and the resultant was charged in a high pressure furnace to be steamed at 130°C for 60 minutes. The corn thus steamed was cooled, adjusted to prescribed water content and temperature, and then flaked to a thickness of 0.5 mm, 0.8 mm, or 1.2 mm with a flaking roller. Thereafter, the resultant was roasted (to be swollen) at 250°C for 5 seconds with a roasting apparatus to set a moisture value to 7% or less, and thus processed corn was obtained.

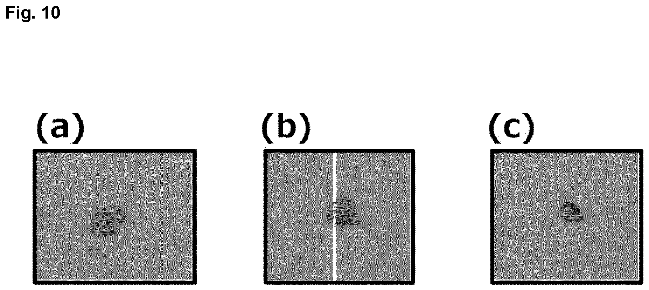

The sizes and appearances (photographs) of the respective processed corn obtained as described above were as follows:
Food flaked to 0.5 mm: 10.21 mm in length, 6.9 mm in width, and 0.84 mm in thickness (Figure 10(a))
Food flaked to 0.8 mm: 7.99 mm in length, 6.04 mm in width, and 1.16 mm in thickness (Figure 10(b))
Food flaked to 1.2 mm: 5.51 mm in length, 4.18 mm in width, and 1.53 mm in thickness (Figure 10(c))

When the processed grain of the present example is mixed with ground meat, grain mixed ground meat comparable in original texture, appearance, taste, aroma, and fillingness of ground meat can be obtained, and in addition, an amount of meat to be used can be reduced to reduce a lipid content, and nutrients (dietary fiber and the like) of the grain not originally contained in the meat can be simultaneously added, and as a result, grain mixed ground meat contributing to health promotion of consumers can be provided.

It is noted that the above-described embodiment is given merely for describing the present invention and does not limit the scope of the present invention. In other words, the scope of the present invention is determined not by the embodiment but by the appended claims.

## Claims

1. A method for producing grain mixed ground meat, comprising:
a step (A) of steaming grain having been shed and polished and cut into 2 to 15 pieces, or cut into a size of 1.5 to 12.0 mm in terms of a sieve opening size;
a step (B) of flaking the grain having been steamed in the foregoing step to a thickness of 0.3 to 2.4 **mm;**
a step (C) of drying or roasting the grain having been flaked in the foregoing step to obtain processed grain having a moisture value of 14% or less; and
a step (D) of mixing the processed grain obtained in the foregoing step with ground meat to obtain grain mixed ground meat.

2. A method for producing grain mixed ground meat, comprising:
a step (A) of steaming grain having been shed and polished;
a step (B) of flaking the grain having been steamed in the foregoing step to a thickness of 0.3 to 2.4 mm;
a step (C) of drying or roasting the grain having been flaked in the foregoing step to obtain processed grain having a moisture value of 14% or less, and cutting into 2 to 15 pieces, or cutting into a size of 1.5 to 12.0 mm in terms of a sieve opening size; and
a step (D) of mixing the processed grain obtained in the foregoing step with ground meat to obtain grain mixed ground meat.

## Patentansprüche

1. Verfahren zur Herstellung von mit Getreide gemischtem Hackfleisch, umfassend:
einen Schritt (A) des Dämpfens von Getreide, das geschält und poliert und in 2 bis 15 Stücke geschnitten oder auf eine Größe von 1,5 bis 12,0 mm in Bezug auf eine Sieböffnungsgröße geschnitten wurde;
einen Schritt (B) des Flockens des in dem vorstehenden Schritt gedämpften Getreides auf eine Dicke von 0,3 bis 2,4 mm;
einen Schritt (C) des Trocknens oder Röstens des im vorstehenden Schritt geflockten Getreides, um verarbeitetes Getreide mit einem Feuchtigkeitswert von 14 % oder weniger zu erhalten; und
einen Schritt (D) des Mischens des im vorstehenden Schritt erhaltenen verarbeiteten Getreides mit Hackfleisch, um mit Getreide gemischtes Hackfleisch zu erhalten.

2. Verfahren zur Herstellung von mit Getreide gemischtem Hackfleisch, umfassend:
einen Schritt (A) des Dämpfens von geschältem und poliertem Getreide;
einen Schritt (B) des Flockens des im vorangehenden Schritt gedämpften Getreides auf eine Dicke von 0,3 bis 2,4 mm;
einen Schritt (C) des Trocknens oder Röstens des im vorstehenden Schritt geflockten Getreides, um verarbeitetes Getreide mit einem Feuchtigkeitswert von 14 % oder weniger zu erhalten, und des Schneidens in 2 bis 15 Stücke oder des Schneidens in eine Größe von 1,5 bis 12,0 mm in Bezug auf eine Sieböffnungsgröße; und
einem Schritt (D) des Mischens des im vorangegangenen Schritt erhaltenen verarbeiteten Getreides mit Hackfleisch, um mit Getreide gemischtes Hackfleisch zu erhalten.

## Revendications

1. Procédé de production de viande hachée mélangée à des céréales, comprenant :
une étape (A) de cuisson à la vapeur de céréales préalablement décortiquées, polies et coupées en 2 à 15 morceaux, ou coupées en particules de 1,5 à 12,0 mm en termes de taille d'ouverture de tamis;
une étape (B) de floconnage des céréales cuites à la vapeur à l'étape précédente, jusqu'à une épaisseur de 0,3 à 2,4 mm ;
une étape (C) de séchage ou de torréfaction des céréales floconnées à l'étape précédente, afin d'obtenir des céréales transformées présentant une teneur en humidité inférieure ou égale à 14 % ; et
une étape (D) de mélange des céréales transformées obtenues à l'étape précédente avec de la viande hachée pour obtenir de la viande hachée mélangée à des céréales.

2. Procédé de production de viande hachée mélangée à des céréales, comprenant :
une étape (A) de cuisson à la vapeur de céréales préalablement décortiquées et polies ;
une étape (B) de floconnage des céréales cuites à la vapeur à l'étape précédente, jusqu'à une épaisseur de 0,3 à 2,4 mm ;
une étape (C) de séchage ou de torréfaction des céréales floconnées à l'étape précédente, afin d'obtenir des céréales transformées présentant une teneur en humidité inférieure ou égale à 14 %, puis découpées en 2 à 15 morceaux, ou coupées en particules de 1,5 à 12,0 mm en termes de taille d'ouverture de tamis; et
une étape (D) de mélange des céréales transformées obtenues à l'étape précédente avec de la viande hachée pour obtenir de la viande hachée mélangée à des céréales.
